# NOUVEAU FASCICULE DE BREVET EUROPEEN

(11) **EP 2 791 535 B2**
(45) Date de publication et mention de la décision concernant l'opposition: **01.01.2020**
(45) Mention de la délivrance du brevet: 20.07.2016
(21) Numéro de dépôt: 12809226.9
(22) Date de dépôt: 14.12.2012
(51) Int. Cl.: F16D 55/226, F16D 65/097

(54) **ORGANE DE GUIDAGE A RESSORT D'UN PATIN DE FREIN A DISQUE ET FREIN A DISQUE EQUIPE DE TELS ORGANES DE GUIDAGE**
MIT EINER FEDER AUSGESTATTETES ELEMENT ZUM FÜHREN EINES SCHEIBENBREMSBELAGS UND SCHEIBENBREMSE MIT SOLCHEN FÜHRUNGSELEMENTEN
SPRING-EQUIPPED MEMBER FOR GUIDING A DISC BRAKE PAD AND DISC BRAKE PROVIDED WITH SUCH GUIDING MEMBERS

(30) Priorité: 15.12.2011 FR 1103876
(43) Date de publication de la demande: 22.10.2014
(73) Titulaire: Robert Bosch GmbH, 70442 Stuttgart (DE)
(72) Inventeur: BERNARD, Simon, 94170 Le Perreux-sur-Marne (FR); MERRIEN, Sandra, 94120 Fontenay-sous-Bois (FR); MAHOUDEAUX, Roger, 93150 Le Blanc-Mesnil (FR)
(86) Numéro de dépôt international: PCT/EP2012/075602
(87) Numéro de publication internationale: WO 2013/087868

(56) Documents cités:
- EP-A1- 0 732 521
- EP-A1- 2 299 142
- WO-A1-01/31223
- WO-A1-2005/064194
- WO-A1-2011/126125
- FR-A1- 2 904 990
- FR-A1- 2 904 990
- FR-A1- 2 925 634
- JP-A- 2002 039 239
- JP-A- 2009 209 961
- JP-A- 2010 196 875
- US-A- 5 699 882
- US-A1- 2010 147 635
- US-A1- 2011 168 503

## Description

### Domaine de l'invention

La présente invention concerne un organe de guidage d'un patin de frein à disque dans une chape composée de deux bras en U reliés par deux pontets, chaque bras ayant à ses deux extrémités un logement axial de section sensiblement rectangulaire bordé par un fond, une surface radiale intérieure et une surface radiale extérieure et au-dessus du logement, - l'organe de guidage étant formé d'un ruban d'acier à ressort, plié, pour être fixé au plot et placé dans le logement du bras et recevoir en coulissement axial, l'oreille correspondante du patin, celle-ci étant munie d'un ressort radial pour être guidée et appuyée par l'organe de guidage et le logement,

Un tel organe de guidage d'un patin de frein dans le logement d'une chape d'un frein à disque facilite le déplacement de la plaquette de frein lors d'un freinage.

L'invention concerne également un frein à disque équipé de tels organes de guidage selon l'invention.

### Etat de la technique

Dans un véhicule équipé de freins à disques, chaque roue à freiner comporte un disque de frein solidaire de la roue et des patins de frein solidaires du châssis du véhicule qui viennent par friction freiner le disque. Le frein comporte un étrier avec une chape ayant de chaque côté du disque de frein une branche en U portant un patin de frein et chaque patin est mobile perpendiculairement au plan du disque, guidé par ses deux extrémités (oreilles) dans les logements des bras de la chape.

Lors d'un freinage, les patins sont entraînés selon la direction tangentielle au disque et les oreilles viennent buter, parfois brutalement, contre le fond de leur logement de guidage provoquant un bruit appelé « klonk » ou claquement. Pour amortir le choc des oreilles dans leur logement et ainsi atténuer le bruit, il est prévu, un ressort entre chaque oreille et son logement et l'amortissement est obtenu par la déformation du ressort dont la forme est adaptée à la force exercée par le patin de frein lors de son déplacement tangentiel.

Par ailleurs, le patin doit pouvoir se déplacer axialement par ses oreilles glissant dans le ressort de maintien qui combine une fonction de glissière et une fonction de ressort.

Une fois le patin en place, le système de glissière se déforme du fait des défauts géométriques et de l'effet de ressort, et crée un effet de ressort/raideur influant sur la génération de bruit au freinage.

On connaît déjà de tels organes de guidage de patins de frein à disque selon les documents WO2005/064194 A1, WO 01/31223 et FR 07 09 124.

### But de l'invention

La présente invention a pour but de perfectionner de tels organes de guidage de freins à disque pour améliorer leur efficacité et réduire le bruit au moment du freinage.

### Exposé et avantages de l'invention

A cet effet, l'invention concerne un organe de guidage selon la revendication 1.

L'organe de guidage selon l'invention est parfaitement fixé au bras de la chape à la fois par son maintien sur le plot et son accrochage par la languette de verrouillage dans le logement du bras. La forme en U du corps de l'organe de guidage offre un bon contact de guidage au ressort auxiliaire ou ressort radial équipant chaque oreille du patin et favorisant non seulement la sensibilité du mouvement de freinage, mais surtout le dégagement du patin par rapport à la surface du disque à la fin du freinage pour éviter tout contact résiduel, source de pertes par frottement.

Le ressort amortisseur exerce un effort modéré poussant le patin de frein en butée contre son appui aval dans le sens de rotation du disque de frein et avec un jeu nul ce qui évite tout bruit lors du freinage.

Du côté amont, le jeu est maximum.

L'effort exercé sur le ressort amortisseur est indépendant des autres actions exercées sur l'organe de guidage. Il faut aussi souligner que la réaction sur le ressort amortisseur varie faiblement au cours de l'usure des garnitures des patins.

L'organe de guidage selon l'invention constitue la solution assurant à la fois l'excellence du guidage de l'oreille du patin et maintient le patin par rapport au bras de la chape pour éviter tout bruit lié à un choc au début du freinage.

Enfin, l'organe de guidage s'installe d'une manière particulièrement simple dans le logement du bras.

Le bord arrondi, contre lequel s'appuie le côté correspondant du patin, assure non seulement un contact de guidage évitant tout grippage même ponctuel ou accrochage du ressort amortisseur à la surface du patin, en particulier pour le mouvement de retour du patin à la fin du freinage, mouvement particulièrement sensible. En outre, cette surface incurvée constitue un ressort complémentaire au ressort amortisseur en épingle à cheveux puisqu'en cas d'écrasement du ressort amortisseur en épingle à cheveux, le bord arrondi de la surface d'appui, servira également par déformation à l'amortissement du choc pour une rotation inverse, en marche arrière.

Suivant une caractéristique avantageuse, les deux butées latérales sont constituées par des languettes découpées dans la lame de part et d'autre du ressort amortisseur en épingle à cheveux et rabattues vers le plot.

Suivant une autre caractéristique avantageuse, la languette de verrouillage est découpée et déformée élastiquement dans le segment de fond et dans le segment intérieur du corps, sensiblement au milieu de la longueur axiale du ruban formant l'organe de guidage.

Cette forme de réalisation est intéressante puisque l'ensemble de l'organe de guidage est découpé dans un seul ruban en acier à ressort, puis est mis en forme par cintrage plus ou moins élastique suivant la rigidité ou l'élasticité à donner à chaque partie de cet organe de guidage.

Suivant une caractéristique de l'invention, l'extrémité arrondie suivant une forme cylindrique du ressort amortisseur en épingle à cheveux, comporte deux prolongements de guidage, recourbés vers l'arrière pour faciliter l'engagement du bord du patin contre le bord arrondi du ressort amortisseur en épingle à cheveux.

Cela facilite tout particulièrement l'engagement du patin avec ses deux oreilles dans le logement respectif du bras, chaque logement étant garni d'un organe de guidage tel que défini ci-dessus.

Suivant une autre caractéristique avantageuse, l'arête de pliage entre le troisième segment du corps et la branche intérieure, comporte une découpe longitudinale sur une partie portante de sa longueur axiale en laissant subsister la matière aux extrémités.

L'invention concerne également un frein à disque équipé d'organes de guidage tels que définis ci-dessus et plus particulièrement un frein à disque dont les logements amont des bras sont équipés chacun d'un organe de guidage comportant :
- un corps à section en forme de U couché sensiblement rectangulaire pour se placer dans le logement du bras de la chape et se poursuivant par,
   * une surface d'appui avant extérieure venant contre la surface avant du plot du bras et portant deux languettes pour former des butées latérales venant de part et d'autre du plot, et un ressort amortisseur en épingle à cheveux revenant vers l'avant pour s'appuyer élastiquement contre le côté du patin au-dessus de l'oreille, et par,
   * une surface d'appui avant intérieure venant contre la surface intérieure du bras et recevant la face du patin sous l'oreille,
   * le corps ayant une surface radiale extérieure venant contre la surface supérieure du logement, suivi d'un fond venant contre le fond du logement et une surface radiale intérieure munie d'une languette de verrouillage pour s'appuyer et s'accrocher contre la surface inférieure du logement.

### Dessins

La présente invention sera décrite ci-après de manière plus détaillée à l'aide d'un exemple de réalisation d'un organe de guidage de patin de frein à disque selon l'invention représenté dans les dessins annexés dans lesquels :
- la figure 1 est une vue de côté d'une chape de frein à disque équipée de deux organes de guidage et d'un patin de frein,
- la figure 2 est une vue correspondant à la figure 1 montrant le patin de frein et la chape avant l'installation du patin de frein,
- la figure 3 est une vue isométrique d'une extrémité de la chape montrant une extrémité de chaque bras relié par un pontet,
- la figure 4 est une vue isométrique de l'organe de guidage selon l'invention,
- la figure 5 est une vue de côté de l'organe de la figure 4,
- la figure 6 est une vue en coupe selon A-A du ressort de la figure 5,
- la figure 7 est une vue en coupe selon B-B du ressort de la figure 5,
- la figure 8 est une vue de côté, partielle, agrandie de l'organe de guidage installé dans le logement du bras avec l'oreille et les deux côtés du patin bordant l'oreille.

### Description de modes de réalisation de l'invention

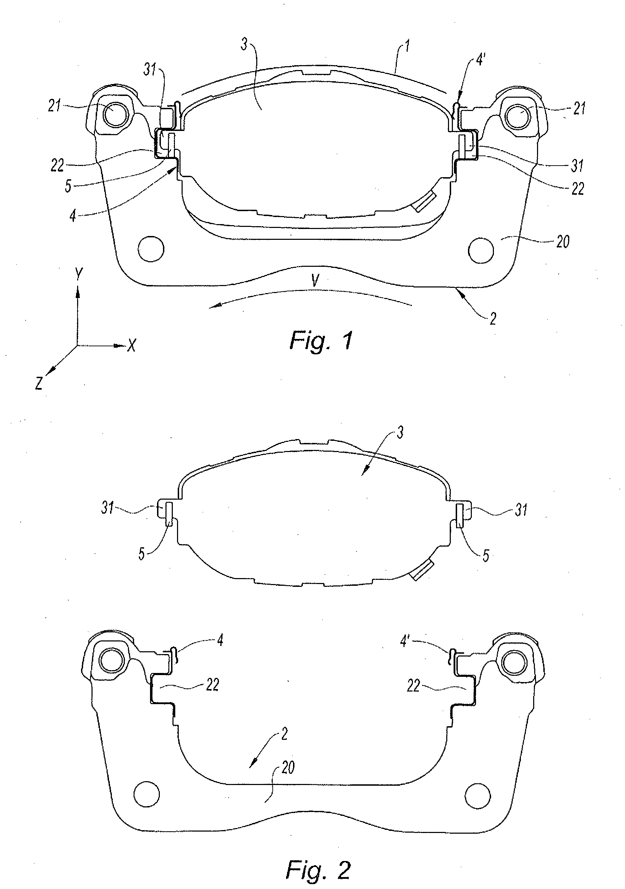

La figure 1 montre de manière générale un disque de frein 1 chevauché par une chape 2 composée de deux bras 20 reliés par deux pontets 21. Ces deux bras 20 en U viennent de part et d'autre du disque 1 et portent chacun un patin de frein. Les patins de frein 3 sont munis à leurs extrémités d'oreilles 31 pour leur montage dans les logements 22 de chaque bras, par l'intermédiaire d'un ressort de guidage 4, 4' équipant chaque logement 22 et coopérant avec l'oreille 31 du patin, elle-même munie d'un ressort auxiliaire 5.

Pour faciliter la description, on adoptera l'orientation définie par les repères X, Y, Z représentés à la figure 1 :
La direction Z est la direction axiale perpendiculaire au plan de la figure et parallèle à l'axe du disque 1.
La direction Y est la direction radiale, c'est-dire une direction passant par l'axe du disque, le côté extérieur et le côté intérieur étant définis dans cette direction.
La direction X correspond à la direction latérale contenue dans le plan de la figure 1 et perpendiculaire à la direction radiale Y. En fait, la direction X est la direction tangentielle, le côté amont et le côté aval correspondant au sens de rotation du disque.
Les oreilles 31 aux deux extrémités du patin 3 coulissent axialement dans les ressorts de guidage 4, 4', c'est-à-dire perpendiculairement au plan de la figure 1.

Le rôle des ressorts de guidage 4, 4' est de guider le patin pour le freinage et son retour en position hors contact du disque de frein et d'amortir le choc des oreilles contre le fond de chaque logement 22 lorsque les patins 3 sont entraînés par le disque 1 pendant une opération de freinage. L'amortissement du choc résulte de la déformation des organes de guidage 4, 4' sous la force exercée par les patins 3. Si le sens de rotation du disque 1 est donné par la flèche curviligne V allant de la droite vers la gauche selon la figure 1, le patin 3 appliqué contre le disque 1, avance de la droite vers la gauche dans le sens de la flèche V et vient s'appuyer contre le fond du logement 22 par l'extrémité de son oreille avant 31. Par son ressort en épingle à cheveux amortit l'organe de guidage 4 ce mouvement et réduit, voire évite, le choc de l'oreille contre le fond du logement 22 en aval et par suite le bruit qui résulterait de ce choc.

La figure 2 montre une vue de côté d'une chape 2 équipée d'un organe de guidage 4 selon l'invention et au-dessus de la chape 2, un patin de frein 3 avec, à ses deux oreilles 31 munies de ressorts radiaux 5 de forme enroulée ; ces ressorts 5 disposés transversalement au plan de la figure 2, sont engagés à la manière de pinces sur les oreilles 31.

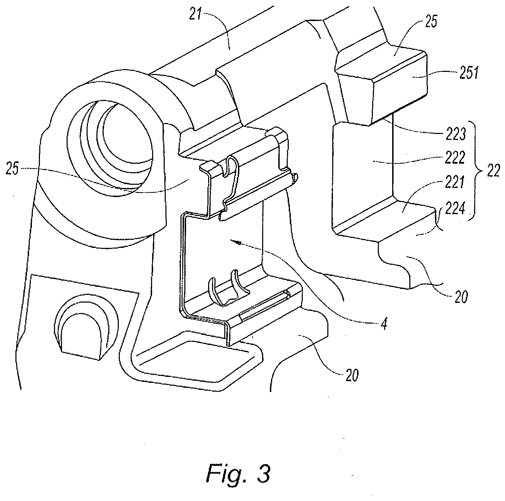

La figure 3 est une vue isométrique partielle d'une chape 2 montrant l'extrémité de deux bras 20 reliés par le pontet 21 et laissant paraître l'intervalle entre les deux bras pour recevoir le disque de frein non représenté.

Cette vue montre la forme du logement 22 bordé par une surface inférieure 222, un fond 221 et une surface supérieure 223. La surface radiale extérieure 223 fait partie d'un plot 25 ayant une surface avant 251 et auquel est fixé l'organe de guidage 4. Le logement de l'autre bras 20 est équipé d'un organe de guidage 4 montrant comment celui-ci est fixé au plot 25, et vient dans le logement 22 pour venir ensuite contre la surface avant sous le logement 22, le bras a une surface avant intérieure 224.

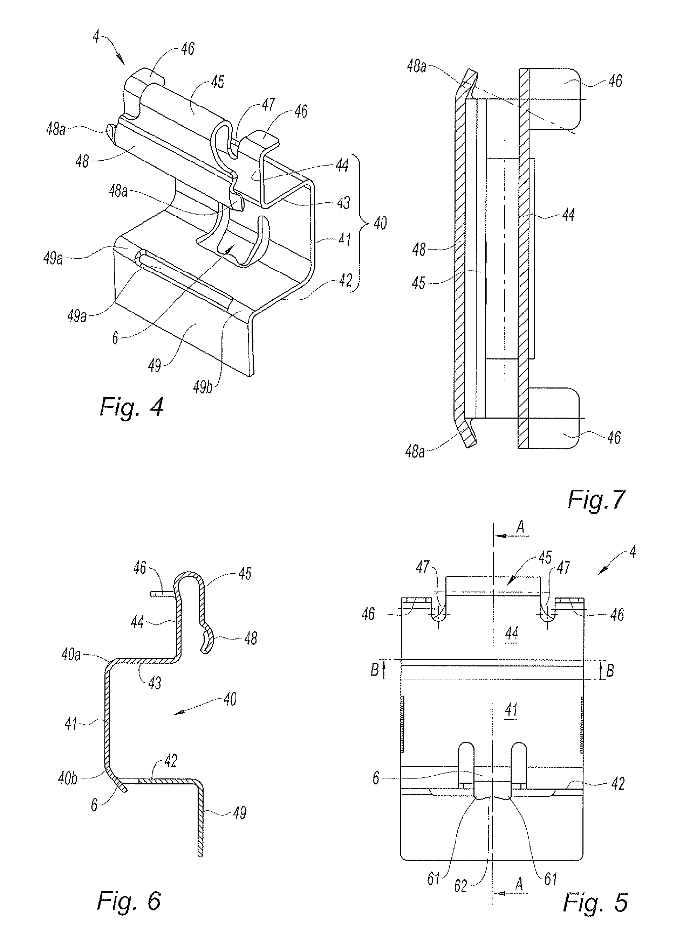

La figure 4 montre un tel organe de guidage 4 selon l'invention, en position non installée et la description utilise les conventions d'orientation définies à l'aide de la figure 1 par les notions « radial », « intérieur », « extérieur », « inférieur », et « supérieur ».

L'organe de guidage 4 est obtenu par la mise en forme d'un ruban en acier à ressort. Il se compose d'un corps 40 en forme de U couché, de section sensiblement rectangulaire avec des coins cintrés 40a, 40b, comprenant d'un côté un fond 41 se poursuivant vers le bas par une surface d'appui intérieure 42 et de l'autre côté par une surface radiale extérieure 43. Celle-ci se prolonge par une surface d'appui avant 44 portant d'une part un ressort amortisseur en épingle à cheveux 45 revenant vers l'avant et bordé de chaque côté par une languette de butée latérale 46 tournée vers l'arrière. Le ressort amortisseur 45 en épingle à cheveux et les deux languettes de butée 46 sont séparés par une découpe 47 de chaque côté pour d'une part, conserver toute la rigidité aux languettes de butée 46 et d'autre part, permettre au ressort amortisseur 45 d'offrir toute son élasticité.

Le ressort amortisseur 45 se termine à l'avant par un bord inférieur arrondi 48, dirigé axialement et se terminant à chaque extrémité par une patte de guidage 48a, incurvée, pour faciliter la mise en place du patin de frein 3 dans le logement 22 du bras 20 de chape 2 équipé d'un tel organe de guidage 4.

La surface d'appui avant intérieure 49 est reliée à la surface radiale intérieure 42 par un pli découpé 49a sur une grande partie de sa longueur et ne laissant subsister que deux attaches cintrées 49b de matière aux deux extrémités.

Enfin, la surface radiale intérieure 42 et le fond 41, sont munis d'une languette de verrouillage 6, découpée dans la masse au niveau du coin cintré 40a, sensiblement au milieu de la longueur axiale de l'organe de guidage 4. Cette languette de verrouillage 6 dépasse de la surface radiale intérieure 42, vers le bas (selon l'orientation de la figure 4) pour constituer un organe d'accrochage venant se gripper contre la surface inférieure 222 du logement 22.

Pour favoriser cet accrochage, le bord avant de la languette de verrouillage 6 comporte deux parties arrondies 61, venant en saillie, séparées par une partie incurvée en creux 62.

La figure 5 est une vue du côté arrière de l'organe de guidage 4 de la figure 4 montrant la disposition du ressort amortisseur 45 en épingle à cheveux attaché à la surface d'appui avant 44 et la séparation des deux languettes de butée latérales 46 par une découpe profonde 47 à un fond arrondi, de façon à désolidariser en dynamique le ressort amortisseur 45 et les deux languettes de butée latérales 46.

Cette vue arrière montre également la forme de la languette de verrouillage 6 et de sa découpe dans le fond 41 et la surface radiale intérieure 42, de manière à laisser la languette de verrouillage 6 jouer pleinement de son élasticité pour s'accrocher dans le logement 22 et y retenir par verrouillage, l'organe de guidage 4.

La figure 6 montre en coupe la section de l'organe de guidage 4 et de ses différentes parties constitutives, mettant en évidence la forme rectangulaire du corps 40 de l'organe de guidage ainsi que le rattachement de la surface d'appui intérieure 42, à l'équerre au fond 41 du corps par un pli arrondi. Il en est de même de la surface d'appui avant 44 se prolongeant par ressort amortisseur 45 en forme d'épingle à cheveux, d'un côté, c'est-à-dire du côté avant, non tourné vers la chape dans laquelle sera placé cet organe de guidage et de l'autre côté, les butées latérales 46. Cette figure montre également la forme du bord arrondi 48 du ressort amortisseur 45 et la forme et la disposition de la languette de verrouillage 6.

La vue en coupe de la figure 7 faite à travers l'organe de guidage 4 au niveau du bord inférieur arrondi 48 du ressort amortisseur 45, souligne la forme incurvée des deux extrémités 48a de ce bord arrondi 48 servant de surfaces de guidage pour recevoir l'oreille 31 du patin par ailleurs muni de son ressort radial 5 (figure 2).

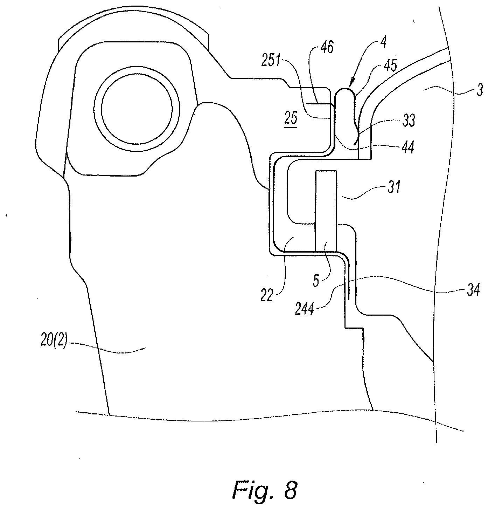

La figure 8 montre en vue de côté à échelle agrandie la disposition de l'oreille amont 31 du patin 3, munie de son ressort radial 5 et venant dans la cavité en forme de U du corps 40 de l'organe de guidage 4 lui-même préalablement installé dans le logement axial 22 de l'extrémité du bras 20 de la chape 2. Cette figure souligne la mise en place de la partie supérieure de cet organe de guidage 4 avec sa surface d'appui avant 44 venant contre la surface avant 251 du plot 25 et les deux languettes de butées latérales 46 venant de part et d'autre du plot 25 et enfin le ressort amortisseur 45 en épingle à cheveux, recourbé du côté opposé aux côtés des languettes de butée 46 pour venir s'appuyer par sa partie arrondie 48 contre le bord du patin 3 au-dessus de l'oreille 31 et repousser le patin 3 en appui contre le logement aval du bras, pour y réduire, voire éliminer tout jeu.

Il convient de remarquer que le bras est avantageusement équipé d'un ressort amortisseur 4 seulement dans le logement 22 amont, alors que le logement aval est équipé d'un organe de guidage sans le ressort amortisseur pour avoir ainsi un jeu maximum entre le logement 22 du bras 20 et l'oreille 31 du côté amont et un jeu pratiquement nul du côté aval.

L'invention concerne ainsi de manière générale les freins à disque et les équipements automobiles.

### NOMENCLATURE

- 1: disque
- 2: chape
20 bras en U
21 pontet
22 logement
221 fond
222 surface inférieure
223 surface supérieure
224 surface avant intérieure
25 plot
251 surface avant du plot
- 3: patin
31 oreille
33 face du patin au dessus de l'oreille
34 face du patin sous l'oreille
- 4: organe de guidage
- 4': organe de guidage
40 corps
40a, b coins / cintrages
41 fond
42 surface radiale intérieure
43 surface radiale extérieure
44 surface d'appui extérieure
45 ressort amortisseur
46 languette latérale
47 découpe
48 bord inférieur arrondi
48a patte de guidage
49 surface d'appui intérieure
49a pli découpé
49b attaches cintrées
- 5: ressort axial
- 6: languette de verrouillage
61 bord arrondi
62 partie incurvée

## Revendications

(1) Organe de guidage d'un patin de frein à disque dans une chape composée de deux bras en U reliés par deux pontets, chaque bras (20) ayant à ses deux extrémités un logement axial (22) de section sensiblement rectangulaire bordé par un fond (222), une surface radiale intérieure (221) et une surface radiale extérieure (223) et au-dessus de celui-ci un plot (25),
(2) - l'organe de guidage (4) étant formé d'un ruban d'acier à ressort, plié, pour être fixé au plot (25) et placé dans le logement (22) du bras (20) et recevoir en coulissement axial, l'oreille (31) correspondante du patin (3), celle-ci étant munie d'un ressort radial (5) pour être guidée et appuyée par l'organe de guidage (4) et le logement (22),
(3) organe de guidage **caractérisé par**
(4) - un corps (40) à section en forme de U couché sensiblement rectangulaire pour se placer dans le logement (22) et se poursuivant par,
(5) * une surface d'appui avant extérieure (44) venant contre la surface avant (251) du plot (25) et portant deux languettes (46) pour former des butées latérales venant de part et d'autre du plot (25), et un ressort amortisseur (45) en épingle à cheveux revenant vers l'avant pour s'appuyer élastiquement contre le côté du patin au-dessus de l'oreille (31), et par,
(6) * une surface d'appui avant intérieure (49) venant contre la surface avant intérieure (224) du bras (20) et recevant la face (34) du patin sous l'oreille (31),
(7) * le corps (40) ayant une surface radiale extérieure (43) venant contre la surface supérieure (223) du logement (22), suivi d'un fond (41) venant contre le fond (221) du logement (22) et une surface radiale intérieure (42) munie d'une languette de verrouillage (6) pour s'appuyer et s'accrocher contre la surface inférieure (222) du logement (22),
l'extrémité du ressort amortisseur (45) en épingle à cheveux étant munie d'un bord axial arrondi (48) s'appuyant contre le côté du patin, et
l'extrémité arrondie (48) suivant une forme cylindrique du ressort amortisseur (45), comportant deux prolongements de guidage (48a), recourbés vers l'arrière pour faciliter l'engagement du bord du patin (3) contre le bord arrondi du ressort amortisseur (45) en épingle à cheveux.

2. Organe de guidage selon la revendication 1,
**caractérisé en ce que**
les deux butées latérales (46) sont constituées par des languettes découpées dans la surface d'appui avant extérieure (44) de part et d'autre du ressort amortisseur (45) en épingle à cheveux et rabattues vers le plot (25).

3. Organe de guidage selon la revendication 1,
**caractérisé en ce que**
la languette de verrouillage (48) est découpée et déformée élastiquement dans le fond (41) et dans la surface radiale intérieure (41) du corps (40), sensiblement au milieu de la longueur axiale du ruban formant l'organe de guidage.

4. Organe de guidage selon la revendication 1,
**caractérisé en ce que**
l'arête de pliage entre la surface radiale intérieure (42) du corps (40) et la surface d'appui avant intérieure (49), comporte une découpe longitudinale (49a) sur une partie importante de sa longueur axiale en laissant subsister des attaches cintrées (49b).

5. Frein à disque comportant des organes de guidage (4) pour les oreilles (31) amont des patins de frein (3) selon l'une quelconque des revendications 1 à 4,
**caractérisé en ce que**
l'organe de guidage comporte :
- un corps (40) à section en forme de U couché sensiblement rectangulaire pour se placer dans le logement (22) du bras (20) de la chape (2) et se poursuivant par,
* une surface d'appui avant extérieure (44) venant contre la surface avant (251) du plot (25) et portant deux languettes (46) pour former des butées latérales venant de part et d'autre du plot (25) du bras (20), et un ressort amortisseur (45) en épingle à cheveux revenant vers l'avant pour s'appuyer élastiquement contre le côté du patin (3) au-dessus de l'oreille (31), et par,
* une surface d'appui avant intérieure (49) venant contre la surface intérieure du bras (20) et recevant la face du patin sous l'oreille (31),
* le corps (40) ayant une surface radiale extérieure (43) venant contre la surface supérieure (223) du logement (22), suivi d'un fond (41) venant contre le fond (221) du logement (22) et une surface radiale intérieure (42) munie d'une languette de verrouillage (6) pour s'appuyer et s'accrocher contre la surface inférieure (222) du logement (22).

## Patentansprüche

(1) Führungselement eines Scheibenbremsbelags in einem Gabelkopf, der aus zwei durch zwei Stege verbundenen U-förmigen Armen besteht, wobei jeder Arm (20) an seinen zwei Enden eine axiale Aufnahme (22) mit im Wesentlichen rechtwinkligem Querschnitt umrandet von einem Boden (222), einer radialen Innenfläche (221) und einer radialen Außenfläche (223) und über dieser einem Block (25) hat,
(2) - wobei das Führungselement (4) von einem Stahlfederband geformt wird, das umgebogen ist, um am Block (25) befestigt und in der Aufnahme (22) des Arms (20) angeordnet zu werden und den entsprechenden Lappen (31) des Belags (3) axial gleitend aufzunehmen, wobei dieser Lappen mit einer radialen Feder (5) versehen ist, um vom Führungselement (4) und von der Aufnahme (22) geführt und angedrückt zu werden,
(3) wobei das Führungselement **gekennzeichnet durch**
(4) - einen Körper (40) mit einem Querschnitt in Form eines im Wesentlichen rechtwinkligen liegenden U, um sich in der Aufnahme (22) anzuordnen, und sich fortsetzend in
(5) * einer äußeren vorderen Auflagefläche (44), die sich gegen die vordere Fläche (251) des Blocks (25) anlegt und zwei Zungen (46) trägt, um seitliche Anschläge zu formen, die sich zu beiden Seiten des Blocks (25) anordnen, und einer haarnadelförmigen Dämpfungsfeder (45), die nach vorne zurückkommt, um sich elastisch gegen die Seite des Belags über dem Lappen (31) zu drücken, und in
(6) * einer inneren vorderen Auflagefläche (49), die sich gegen die innere vordere Fläche (224) des Arms (20) anlegt und die Seite (34) des Belags unter dem Lappen (31) aufnimmt,
(7) * wobei der Körper (40) eine äußere radiale Fläche (43), die sich gegen die obere Fläche (223) der Aufnahme (22) anlegt, gefolgt von einem Boden (41), der sich gegen den Boden (221) der Aufnahme (22) anlegt, und eine innere radiale Fläche (42) hat, die mit einer Verriegelungszunge (6) versehen ist, um sich gegen die innere Fläche (222) der Aufnahme (22) zu drücken und festzuklammern,
wobei das Ende der haarnadelförmigen Dämpfungsfeder (45) mit einem abgerundeten axialen Rand (48) versehen ist, der sich gegen die Seite des Belags andrückt, und das abgerundete Ende (48), das einer zylindrischen Form der Dämpfungsfeder (45) folgt, zwei Führungsverlängerungen (48a) aufweist, die nach hinten gekrümmt sind, um das Einführen des Rands des Belags (3) gegen den abgerundeten Rand der haarnadelförmigen Dämpfungsfeder (45) zu erleichtern.

2. Führungselement nach Anspruch 1, **dadurch gekennzeichnet, dass** die zwei seitlichen Anschläge (46) aus Zungen bestehen, die in der äußeren vorderen Auflagefläche (44) zu beiden Seiten der haarnadelförmigen Dämpfungsfeder (45) ausgeschnitten und zum Block (25) umgebogen sind.

3. Führungselement nach Anspruch 1, **dadurch gekennzeichnet, dass** die Verriegelungszunge (48) im Boden (41) und in der inneren radialen Fläche (41) des Körpers (40) im Wesentlichen in der Mitte der axialen Länge des das Führungselement formenden Bands ausgeschnitten und elastisch verformt ist.

4. Führungselement nach Anspruch 1, **dadurch gekennzeichnet, dass** die Faltkante zwischen der inneren radialen Fläche (42) des Körpers (40) und der inneren vorderen Auflagefläche (49) einen Längsausschnitt (49a) über einen großen Teil ihrer axialen Länge aufweist, indem gebogene Halterungen (49b) übrig gelassen werden.

5. Scheibenbremse, die Führungselemente (4) für die vorderen Lappen (31) der Bremsbeläge (3) nach einem der Ansprüche 1 bis 4 aufweist, **dadurch gekennzeichnet, dass** das Führungselement aufweist:
- einen Körper (40) mit einem Querschnitt in Form eines im Wesentlichen rechtwinkligen liegenden U, um sich in der Aufnahme (22) des Arms (20) des Gabelkopfs (2) anzuordnen, und sich fortsetzend in
* einer äußeren vorderen Auflagefläche (44), die sich gegen die vordere Fläche (251) des Blocks (25) anlegt und zwei Zungen (46) trägt, um seitliche Anschläge zu formen, die sich zu beiden Seiten des Blocks (25) des Arms (20) anordnen, und einer haarnadelförmigen Dämpfungsfeder (45), die nach vorne zurückkommt, um sich elastisch gegen die Seite des Belags (3) über dem Lappen (31) zu drücken, und in
* einer inneren vorderen Auflagefläche (49), die sich gegen die innere vordere Fläche des Arms (20) anlegt und die Seite des Belags unter dem Lappen (31) aufnimmt,
* wobei der Körper (40) eine äußere radiale Fläche (43), die sich gegen die obere Fläche (223) der Aufnahme (22) anlegt, gefolgt von einem Boden (41), der sich gegen den Boden (221) der Aufnahme (22) anlegt, und eine innere radiale Fläche (42) hat, die mit einer Verriegelungszunge (6) versehen ist, um sich gegen die innere Fläche (222) der Aufnahme (22) zu drücken und festzuklammern.

## Claims

(1) Guiding member for a disk brake pad in a cap which is composed of two U-like arms connected by two bars, each arm (20) having at the two ends thereof an axial housing (22) which has a substantially rectangular cross-section and which is bounded by a base (222), an internal radial surface (221) and an external radial surface (223) and a stud (25) thereabove,
(2) - the guiding member (4) being formed by a spring steel band which is folded in order to be fixed to the stud (25) and which is positioned in the housing (22) of the arm (20) and to receive in an axially sliding manner the corresponding lug (31) of the pad (3), the lug being provided with a radial spring (5) in order to be guided and pressed by the guiding member (4) and the housing (22),
(3) which guiding member is **characterized by**
(4) - a body (40) which has a cross-section in the form of a U on its side and which is substantially rectangular in order to be positioned in the housing (22) and which is continued by
(5) * a front external abutment surface (44) which moves into abutment against the front surface (251) of the stud (25) and which carries two tongues (46) in order to form lateral stops which extend at one side and the other of the stud (25) and a hairpin-like shock-absorbing spring (45) which moves toward the front in order to resiliently press against the side of the pad above the lug (31), and by
(6) * a front internal abutment surface (49) which moves into abutment against the front internal surface (224) of the arm (20) and which receives the face (34) of the pad under the lug (31),
(7) * the body (40) having an external radial surface (43) which moves into abutment against the upper surface (223) of the housing (22), followed by a base (41) which moves into abutment against the base (221) of the housing (22) and an internal radial surface (42) which is provided with a locking tongue (6) in order to press against and become engaged with the lower surface (222) of the housing (22),
the end of the hairpin-like shock-absorbing spring (45) being provided with a rounded axial edge (48) which presses against the side of the pad, and
the end (48) rounded in accordance with a cylindrical shape of the shock-absorbing spring (45) comprising two guiding extensions (48a) which are curved toward the rear in order to facilitate the engagement of the edge of the pad (3) against the rounded edge of the hairpin-like shock-absorbing spring (45).

2. Guiding member according to Claim 1,
**characterized in that**
the two lateral stops (46) are constituted by tongues which are cut from the front external abutment surface (44) at one side and the other of the hairpin-like shock-absorbing spring (45) and which are bent toward the stud (25).

3. Guiding member according to Claim 1,
**characterized in that**
the locking tongue (48) is cut and resiliently shaped from the base (41) and the internal radial surface (41) of the body (40), substantially at the centre of the axial length of the band forming the guiding member.

4. Guiding member according to Claim 1,
**characterized in that**
the folding edge between the radial internal surface (42) of the body (40) and the front internal abutment surface (49) comprises a longitudinal cutout (49a) over a large portion of the axial length thereof, allowing curved attachments (49b) to remain.

5. Brake disk comprising guiding members (4) for the upstream lugs (31) of the brake pads (3) according to one of Claims 1 to 4,
**characterized in that**
the guiding member comprises:
- a body (40) which has a cross-section in the form of a U on its side and which is substantially rectangular in order to be positioned in the housing (22) of the arm (20) of the cap (2) and which is continued by
* a front external abutment surface (44) which moves into abutment against the front surface (251) of the stud (25) and which carries two tongues (46) in order to form lateral stops which extend at one side and the other of the stud (25) of the arm (20) and a hairpin-like shock-absorbing spring (45) which moves toward the front in order to resiliently press against the side of the pad (3) above the lug (31), and by
* a front internal abutment surface (49) which moves into abutment against the internal surface of the arm (20) and which receives the face of the pad under the lug (31),
* the body (40) having an external radial surface (43) which moves into abutment against the upper surface (223) of the housing (22), followed by a base (41) which moves into abutment against the base (221) of the housing (22) and an internal radial surface (42) which is provided with a locking tongue (6) in order to press against and become engaged with the lower surface (222) of the housing (22).
